# EUROPEAN PATENT APPLICATION

(11) **EP 1 600 428 A1**
(43) Date of publication of application: **30.11.2005**
(21) Application number: 05009814.4
(22) Date of filing: 04.05.2005
(51) Int. Cl.: C03C 17/34, C03C 17/36, B60S 1/02

(54) **Control structure for controlling water drop slidable property of surface**

(30) Priority: 25.05.2004 JP 2004154230
(71) Applicant: HONDA MOTOR CO., Ltd., Tokyo (JP)
(72) Inventor: Hayakawa, Yukio, Wako-shi Saitama (JP)
(74) Representative: Rupp, Christian

(57) **Abstract**

A control structure controls a slidable property of an object and has: a piezoelectric film, on a surface of an object, made of a piezoelectric material; and at least a pair of electrodes, on the piezoelectric film, to which AC voltage is applied.

## Description

### FIELD OF THE INVENTION

The present invention relates to a control structure for controlling a water drop slidable property at a surface thereof so as to slide water drops attachable to an object by self-weight or other force along the surface.

### BACKGROUND OF THE INVENTION

Technologies that prevent water drops from sticking to a surface of an object such as a windshield of an automobile are known. For example, first related art is known in which a repellency substance such as fluorine resin is coated on a surface of an object to improve a water drop slidable property of the surface. The surface coated with such fluorine resin makes contact angles of water drops with the surface large to provide the water drop slidable property that helps the water drops to slide along the surface. This resists attachment of water drops to the surface.

Second related art is known in which electrodes are arranged on a surface of an object with a predetermined water drop slidable property, and attaching water drops are charged by an electric field generated by the electrodes to assist movement of the charged water drops by Coulomb force or force due to electric gradient under influence of the electric field generated by the electrodes. Japanese laid-open patent application publication No. 2002-114538 discloses such a technology at paragraphs 0006 to 0016.

According to the first related art, there is no actual technology that can provide a sufficient water drop slidable property to slide water drops having relatively smaller diameters attaching to a surface of a stationary object only using self-weights of water drops.

In the second related art, the water drop slidable property is controlled only at the surface of the object adjacent to the arranged electrodes, so that the electrodes must be arranged over the whole of the surface. In addition, charging the attaching water drops requires application of a high voltage to the electrodes, wherein maintaining high voltage potential at the surface of the object may cause various problems in actual use.

### SUMMARY OF THE INVENTION

An aspect of the present invention provides a control structure capable of providing at a surface of an object such a high water drop slidable property that water drops attaching to the object slide by their weights so as to be cleared.

A first aspect of the present invention provides a control structure attachable to an object for controlling a slidable property at a surface thereof, comprising: a piezoelectric film, attachable to the object, comprising a piezoelectric material; and at least a pair of electrodes, provided for the piezoelectric film, to which AC voltage is applicable.

According to this structure, on the surface of the object is formed a piezoelectric film that is strained when an electric field is applied and polarized when it is strained. When the AC voltage is applied to the electrodes, a portion sandwiched between the electrodes contracts and expands, which generates elastic waves in a horizontal direction of the piezoelectric film (along the surface of the piezoelectric film). The elastic wave propagates as if a strained portion of the piezoelectric film slides. The strained portions of the piezoelectric film develop polarization which charges minute regions at the surface. This forms at the surface such charge distribution that polarities of the minute regions vary within the propagation region of the elastic waves.

The formation of the charge distribution in which polarities of the minute regions vary weakens bonding force between the surface of the piezoelectric film and attaching water drops, and thus, a preferable water drop slidable property is given, if the surface of the object is inclined such that the gravity slides water drops along the surface. The number of pairs of electrodes may be plural to cover the whole of the surface.

A second aspect of the present invention provides the control structure based on the first aspect further comprising an AC power supply for supplying the AC voltage having a frequency at a range from 400 kHz to 800 kHz to the pair of electrodes.

According to this structure, the AC voltage having a frequency at a frequency band of ultrasonic waves is applied to the electrodes, which generates the elastic waves that propagate through the surface portion of the piezoelectric film and the object as surface acoustic waves propagating with its energy concentrated at the surface portion. Thus, the energy of the AC voltage is efficiently converted into polarization in the piezoelectric film 11 provided on the surface of the object 10, which improves the water drop slidable property.

A third aspect of the present invention provides the control structure based on the first aspect further comprising an AC power supply for supplying the AC voltage having a frequency determined in accordance with a resonation frequency of the piezoelectric film.

According to this structure, amplitude of the elastic wave is increased by resonation, which strongly polarizes the piezoelectric film provided on the surface of the object, improving the water drop slidable property.

A fourth aspect of the present invention provides the control structure based on any of the first to third aspects, wherein the pair of electrodes comprise comb electrodes, teeth of one of the comb electrodes are interlaced with the other of the comb electrodes with a predetermined gap.

According to the structure, a lot of narrow regions between electrodes (teeth of the comb electrodes) are accumulated (recurrently arranged) along the surface (rims of the combs). Thus, the narrower regions make magnitudes of the electric fields applied to the region high without changing the applied voltage. Further, strain at respective regions is added by accumulation along the surface, which increases the amplitude of strain of the elastic waves.

### BRIEF DESCRIPTION OF THE DRAWINGS

The object and features of the present invention will become more readily apparent from the following detailed description taken in conjunction with the accompanying drawings in which:
Fig. 1A is a perspective view of a control structure for controlling water drop slidable property at a surface of an object;
Figs. 1B and 1C are side views of the control structure illustrating the operation of the control structure;
Fig. 2A is a schematic drawing illustrating operation of the control structure according to the present invention;
Figs. 2B to 2F are schematic drawings illustrating polarity variation of piezoelectric film according to the present invention; and
Figs. 3A to 3C are schematic drawings illustrating behaviors of water drops at interface with the surface of the piezoelectric film according to the present invention.

The same or corresponding elements or parts are designated with like references throughout the drawings.

### DETAILED DESCRIPTION OF THE INVENTION

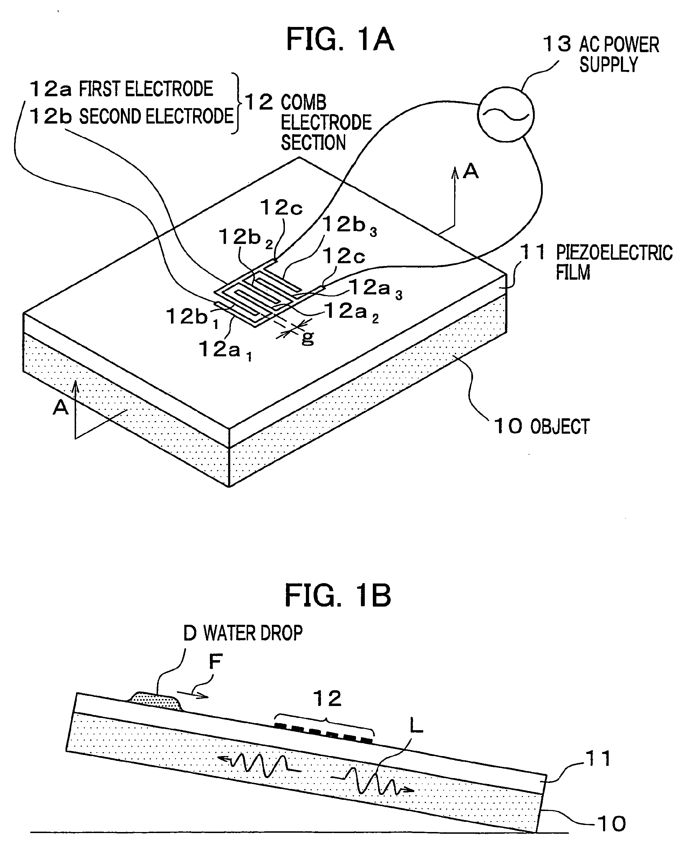

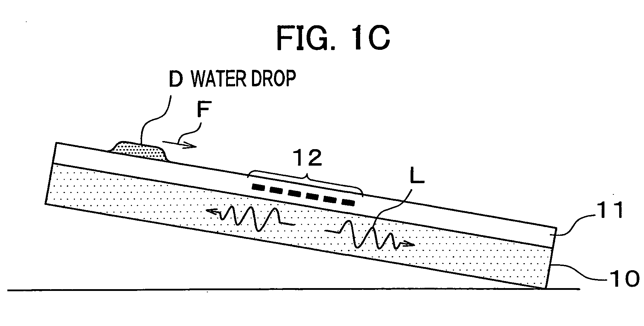

As shown in Fig. 1A, a piezoelectric film 11 is formed by coating with a constant thickness on a surface of an object 10 of which water drop slidable property is to be improved. Further, on the piezoelectric film 11 provided is a comb electrode section 12 to which AC voltage is supplied from an AC power supply 13.

The piezoelectric film 11 comprises a piezoelectric material in which polarization occurs upon application of an electric field (dipoles are aligned in the direction of the electric filed), which develops strain or inversely, polarization upon application of strain. Among such piezoelectric materials is, for example, PbZrO₃-PbTiO₃ (hereinafter, referred to as PZT). The PZT is coated on the surface of the object 10 with a constant predetermined thickness (preferably 5 µm to 100 µ m). The PZT has a high hydrophile property because hydroxyl group (-OH) are arranged on the surface thereof. Generally, this feature is common to metal oxides.

The comb electrode section 12 comprises first and second comb electrodes 12a and 12b each having a comb shape and including a plurality (three pairs in Fig. 1A) of electrode chips 12a₁, 12a₂,···, and 12b₁, 12b₂,···that correspond to teeth of the comb shapes, respectively. The electrode chips 12a₁, 12a₂,··· of the first electrode 12a are interlaced with the electrode chips 12b₁, 12b₂,···of the second electrode 12b in which each pair of neighboring electrode chips are equidistantly spaced in parallel with a gap g (insulation). The comb electrode section 12 may be formed by patterning a metal film such as gold on the piezoelectric film 11 (gold plating) or by buried in or inside the piezoelectric film 11 as shown in Fig. 1C. The material is not limited to a metal film, but may be a transparent electrode made of metal oxide group such as ITO (indium-tin dioxide). In other words, it is sufficient that the comb electrode section 12 is configured or arranged so as to apply an AC electric field to a local region of the piezoelectric film 11 as described later.

When a voltage is applied between the first and second electrodes 12a and 12b, electric fields are developed at local regions each sandwiched between neighboring electrode chips 12a₁, 12b₁, 12a₂, 12b₂,···. At each local region polarization occurs according to a polarity and a magnitude of the electric field developed, which expands or contracts the local region. The expansion and the contraction occurs synchronously at local regions sandwiched between neighboring electrodes chips 12a₁, 12b₁, 12a₂, 12b₂,···, respectively. This expands or contracts the whole of the areas that the comb electrode section 12 occupies. Thus, application of the AC voltage having a predetermined frequency supplied from the operated AC power supply 13 to each of the first electrode 12a and the second electrode 12b through terminals 12c expands and contracts the whole of the area of the comb electrode section 12 with an amount of expansion and contraction being proportional to an amplitude of the AC voltage at a frequency corresponding to the frequency of the AC voltage. In other words, the expansion and contraction of the piezoelectric film under or adjacent to the comb electrode section 12 generates, as shown in Fig. 1B, elastic waves L propagating through the surface portion of the piezoelectric film 11 and the object 10 in the direction perpendicular to the extending direction of the electrode chips 12a₁, 12b₁,12a₂, 12b₂,···.

The AC voltage applied to the comb electrode section 12 preferably has a frequency at the ultrasonic wave region ranging from 400 kHz to 800 kHz. Experiments show that, when the frequency was higher than such an ultrasonic wave region, water drops were broken by vibration energy, and when the frequency was lower than the ultrasonic wave region, no sufficient water drop slidable property was provided. Further, the experiments show that the AC voltage may have any waveform such as a sine wave and a square wave, and the amplitude (pulse height) is appropriately about 40 volts.

In addition, it is preferable that the gap (interval) "g" is made as small as possible because the smaller the gap "g" between neighboring electrode chips 12a₁ and 12b₁, the greater the intensity of the electric fields is developed at each local region sandwiched between neighboring teeth 12a₁ and 12b₁. Further, it is preferable that that the number of the pairs of electrode chips 12a₁, 12b₁,12a₂, 12b₂,··· is made as larger as possible because the greater the number of the pairs of electrode chips 12a₁, 12b₁, 12a₂, 12b₂,···, the greater amplitude of strain of the developed elastic wave L.

Operation of the control structure for controlling the water drop slidable property of the object 10 according to the present invention will be described with reference to Figs. 1B, 2, and 3. Fig. 1B shows a cross section taken on a plane including a line A-A and perpendicular to the surface of the object 10 as shown in Fig. 1A, wherein the object 10 is inclined along the plane from the horizontal, wherein an extending direction of the electrode chips 12a₁, 12b₁, 12a₂, 12b₂,··· is perpendicular to the plane. In other words, the electrode chips 12a₁, 12b₁, 12a₂, 12b₂,··· extend perpendicular to the plane and to a direction F of maximum depression angle (a fall line direction F). First, a water drop D is dispensed on the surface of the object 10 horizontally arranged before the AC voltage is applied to the comb electrode section 12, and then the object is inclined by 5 to 10 degrees from the horizontal. In this condition, the water drop D rests on the surface of the object 10. Next, when the AC voltage is applied to the comb electrode section 12 by driving the AC power supply 13, the water drop D begins to move in the downward direction (the fall line direction F) of the slope of the object 10 and then, reaches the lowest point.

The reason why the drop D moves on the surface of the object 10 on which the piezoelectric film 11 is coated is considered as follows:

When the comb electrode section 12 on the surface of the piezoelectric film 11 operates on driving the AC power source 13 with the frequency at the ultrasonic region, the portion where the comb electrode section 12 is arranged vibrates, and the resultant elastic waves L propagate along the surface portion of the piezoelectric film 11 and the object 10 in a direction perpendicular to the extending direction of the electrode chips 12a₁, 12a₂, ···and 12b₁, 12b₂, ··· (downward and upward of the slope). The elastic wave L is a surface acoustic wave (SAW) which propagates with its energy concentrated at the surface of an object.

In the above description, the water drop D is dispensed on the surface of the object and then the object 10 is inclined after the application of the AC voltage. However, the operation order is provided only for demonstrating the improvement of the water drop slidable property with this control structure. Thus, if the water drop D rests on the surface of the inclined object 10 and then the AC voltage is applied, the water drop D also can slide along the surface of the object 10 by applying the AC voltage. Further, if the water drop D is dispensed on the surface of the inclined object 10 during application of the AC voltage, the water drop D will slide along the surface of the object 10, though the water drop D would not slide when the AC voltage is not applied.

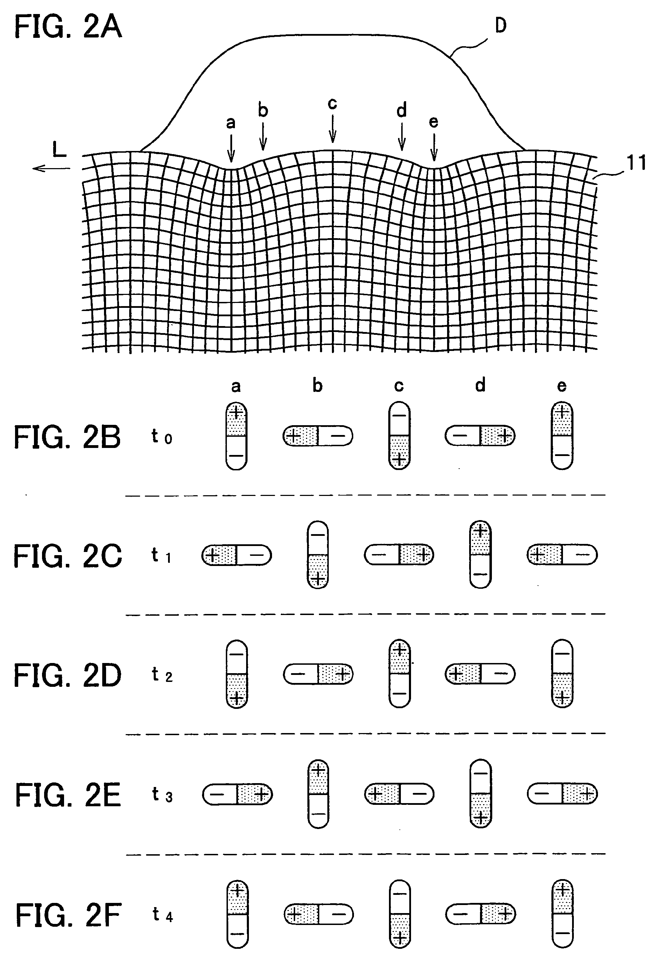

The operation will be further described with reference to Fig. 2A which is an across-sectional drawing indicating an interface between the piezoelectric film 11 and the water drop D at reference time to. The elastic wave L (surface acoustic wave) is, as shown in Fig. 2A, combination of a longitudinal wave component showing vibration in the propagation direction along the surface of the object 10 and a transverse wave component showing vibration in the vertical direction to the surface, wherein both components have a shift by 90 degrees therebetween.

The surface acoustic wave propagates in which condensation and rarefaction portions accompanying concave and convex portions, respectively at the piezoelectric film 11 continuously and alternately propagate at the surface portion of the piezoelectric film 11 and the object 10. In Fig. 2A, the condensation (convex) portions denoted with "a" and "e" are positively charged by the polarization in the piezoelectric material, and the rarefaction (concave) portion denoted with "c" is negatively charged by the polarization in the piezoelectric film 11.

Figs. 2B to 2F show, with assumption that a period of the surface acoustic wave is T (=1/f, f is a frequency of the AC power supply 13), alignment directions of dipoles at points "a", "b", "c", "d", and "e" at timings t₀, t₁, t₂, t₃, and t₄ when an interval T/4 successively passed from a reference time to.

Consider the point "a", at timing t₀, a condensation (concave) portion of the surface acoustic wave L passes the point "a". In the event, the point "a" is positively charged. Next, at timing t₁, a node of the elastic wave L passes there, which is an electrically neutral condition since no strain exists in the piezoelectric film 11 thereat. At timing t₂, a rarefaction portion of the elastic wave L (convex portion) passes the point "a" which is negatively charged. Further, at the timing t₃, a node of the elastic wave L passes there, which is an electrically neutral condition since no strain exists in the piezoelectric film 11 thereat. The cycle completes at the timing t₄, and the condensation region (concave region) of the elastic wave L passes there again, which positively charges there.

Although description regarding the points "b", "c", "d", and "e" are omitted, the same phenomenon occurs at the points "b", "c", "d", and "e", with phases shifted by π/4, respectively.

As mentioned above, as the elastic wave L (surface acoustic wave) propagates, at an interface at which the water drop D is in contact with the piezoelectric film 11, the minute regions neighboring with an interval equivalent to a half wave length of the elastic wave L are distributed with electric polarities alternately inverted with a time interval which is the same as the period of the elastic wave L.

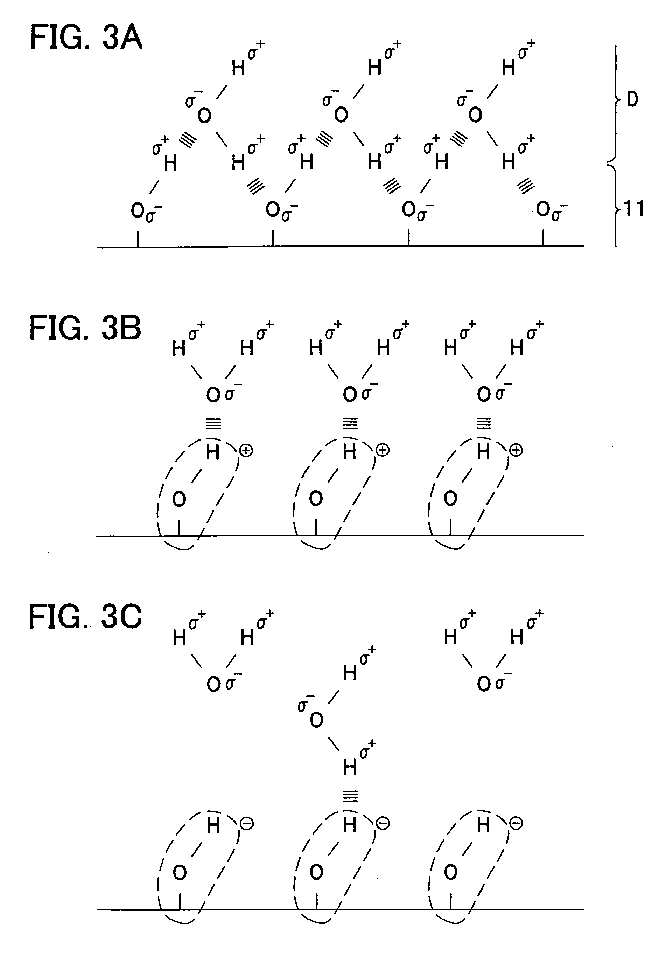

Referring now to Figs. 3A to 3C, consider constraint force of the surface of the piezoelectric film 11 to the water drop. Figs. 3A to 3C schematically show interfaces between the water drop D and the piezoelectric film 11, in which the interface is enlarged to a level of molecules. Fig. 3A shows a nonpolar condition of the surface of the piezoelectric film 11. Fig. 3B shows a condition where the surface of the piezoelectric film 11 is positively charged. Fig. 3C shows a condition where the surface of the piezoelectric film 11 is negatively charged. In Figs. 3A to 3C, δ⁺ and δ⁻ indicate polarization of electrons within each molecule (functional group).

As shown in Fig. 3A, it is considered that, when the surface has no polarity, the water drop D is strongly constrained by the surface of the piezoelectric film 11 by hydrogen bonding between water molecules (H₂O) and hydroxyl groups (-OH) that cover the surface of the piezoelectric film 11 having the high hydrophilicity because the piezoelectric film 11 is one of metal oxides showing such a bonding. Thus, consider that charges having a different polarity at each minute region at the surface of the piezoelectric film 11 are distributed as mentioned above, wherein the polarity of charges alternately changes with time.

When the minute region is positively charged as shown in Fig. 3B, it is considered that the hydrogen bonding (Fig. 3A) between a hydrogen atom of a water molecule (H₂O) and an oxygen atom of a hydroxyl group (-OH) is cut to form an electric bonding (Fig. 3B) between an oxygen atom of a water molecule (H₂O) and the hydroxyl group (-OH) with the whole thereof negatively charged.

Next, when the minute region is, as shown in Fig. 3C, negatively charged, it is considered that the electrical bonding, as shown in Fig. 3C, between the oxygen atom of the water molecule (H₂O) and the hydroxyl group (-OH) with the whole thereof positively charged is cut. Then, it is considered that a portion of the water molecules (H₂O) provide electric bonding with hydroxyl group (-OH) with the whole thereof negatively charged (the center portion in Fig. 3C) and other water molecules (H₂O) are liberated (both ends in Fig. 3C) and thus, released from the constraint by the surface of the piezoelectric film 11.

While the elastic wave L propagates, the electric operation in which the electric polarities of the minute regions at the surface of the piezoelectric film 11 alternate in a short cycle, and physical operation in which the transverse wave propagates through the interface weakens the constraint force acting the interface between the water drop and the piezoelectric film 11. Thus, if the surface of the object 10 is inclined, the water drop D tends to move along the slope by the gravity, which improves the water drop slidable property of the piezoelectric film 11. Finally, this can be considered that the water drop slidable property of the object 10 is improved.

In addition, the larger amount of strain of the piezoelectric film 11, the greater the magnitude of dipoles developed at minute regions, which results in improvement of the water drop slidable property. Thus, to obtain greater amplitude of the surface acoustic wave, it is preferable that the surface of the piezoelectric film 11 vibrates at a resonance frequency, which is equivalent to a natural frequency of the surface of the piezoelectric film 11. Accordingly, with the power supplied to the AC power supply 13 unchanged, large amplitude of the propagating surface acoustic wave is provided because the surface of the piezoelectric film 11 resonates by vibrating at the resonance frequency.

In Fig. 1, only one comb electrode section 12 is arranged at the center of the object 10. The surface acoustic wave generated by the comb electrode 12 attenuates as it propagates at the surface portion of the piezoelectric film 11 and the object 10. Consequently, it is preferable that a plurality of comb electrodes 12 are adaptively distributed such that the surface acoustic waves reach the whole of the surface. In addition, water molecules are slidable at the surface of the piezoelectric film 11, which prevents stain from attaching to the surface over the water molecules. This provides an advantageous effect that stain can be easily removed.

In the above-described embodiment, the object 10 may comprise, for example, a glass for a windshield, a back mirror, and a shield glass for a head lamp, used in objects to which water drops may attach, such as automobiles, trains, aircrafts, windows of buildings, and surfaces of displays. Such objects 10 are visually transparent. However, the object 10 may comprise an opaque material. Further, the object 10 has a predetermined stiffness because the object 10 is required to transmit the elastic wave having a frequency at the ultrasonic range. Further, the object 10 has such flatness as to slide water drops D. However, the surface may be curbed to form the windshield. Furthermore, the surface of the object 10 can be curved more freely than the conventional windshield because there is no wiper.

The object 10 is used in a standing condition when the movement is mainly caused by the gravity. However, if the movement is mainly caused by, for example, wind or its combination, the surface may be horizontally arranged. The extending direction of the electrode chips 12a₁, 12a₂,···, and 12b₁, 12b₂,··· is made perpendicular to such movement of water drops D. In addition, in the above-described embodiment, the piezoelectric film 11 covers the whole of one surface of the object 10. However, the piezoelectric film 11 may be partially formed at a necessary area, for example, the surface area of the windshield that a window wiper wiped.

## Claims

1. A control structure attachable to an object for controlling a slidable property at a surface thereof, **characterized by**:
a piezoelectric film (11), attachable to the object (10), comprising a piezoelectric material; and
at least a pair of electrodes (12a, 12b), provided for the piezoelectric film (11), to which AC voltage (13) is applicable.

2. The control structure as claimed in claim 1, characterize by an AC power supply for supplying the AC voltage having a frequency at a range from 400 kHz to 800 kHz to the pair of electrodes.

3. The control structure as claimed in claim 1, **characterized by** an AC power supply for supplying the AC voltage having a frequency determined in accordance with a resonation frequency of the piezoelectric film.

4. The control structure as claimed in any of claims 1 to 3, **characterized in that** the pair of electrodes comprise comb electrodes, and teeth of one of the comb electrodes are interlaced with the other of the comb electrodes with a predetermined gap.

5. The control structure as claimed in any of claims 2 and 3, **characterized in that** the AC voltage has a voltage of approximately 40 volts.

6. The control structure as claimed in claim 1, **characterized in that** the surface of the piezoelectric film in a used condition thereof is inclined from the horizontal along a plane perpendicular to an extending direction of the teeth of the pair of electrodes.

7. The control structure as claimed in claim 1, **characterized in that** the pair of the electrodes is buried in the piezoelectric film.

8. The control structure as claimed in claim 1, **characterized in that** the pair of the electrodes is arranged on the piezoelectric film.

9. The control structure as claimed in claim 1, **characterized in that** the piezoelectric film has a thickness from 5 µm to 100 µm.
